# EUROPEAN PATENT APPLICATION

(11) **EP 4 796 285 A1**
(43) Date of publication of application: **26.08.2026**
(21) Application number: 24879734.2
(22) Date of filing: 16.10.2024
(51) Int. Cl.: B29C 45/36, B29C 45/16, B29C 49/06, B29C 49/22

(54) **DIE UNIT, BLOW MOLDING DEVICE, AND BLOW MOLDING METHOD**

(30) Priority: 16.10.2023 JP 2023178353
(71) Applicant: Nissei ASB Machine Co., Ltd., Komoro-shi, Nagano 384-8585 (JP)
(72) Inventor: OIKE, Toshiteru, Komoro-shi, Nagano 384-8585 (JP)
(74) Representative: Novagraaf International SA
(86) International application number: PCT/JP2024/036802
(87) International publication number: WO 2025/084312

(57) **Abstract**

To provide a mold unit (101) for manufacturing a preform (20), including an injection core mold unit (111) including an injection core mold (113), a neck mold unit (500) including a neck mold (510), an injection cavity mold unit (112) including an injection cavity mold (117), and a guide mechanism (600) configured to guide an operation of the injection core mold (113) during movement into the neck mold (510), in which the guide mechanism (600) is configured to release the guidance of the operation of the injection core mold (113) when the injection core mold (113) reaches a mold clamping position.

## Description

### TECHNICAL FIELD

The present disclosure relates to a mold unit, a blow molding apparatus, and a blow molding method.

### BACKGROUND ART

Conventionally, a delamination container being made of resin and having a two-layer structure including, for example, an inner layer and an outer layer is known, and, in the delamination container, the inner layer is peeled off from the outer layer in response to the contents being discharged. This type of delamination container is also called a delami bottle or an airless bottle, and is used as a container for a seasoning liquid such as soy sauce and a cosmetic liquid of cosmetics.

In recent years, a one-stage hot parison typed blow molding method is realized for manufacturing a delamination container, in which steps from an injection molding step to a blow molding step are carried out continuously. For example, PTL 1 discloses an injection stretch blow molding machine capable of continuously performing a cycle of molding steps such as injection molding, stretch blow molding, and molded article ejection by moving a lip mold holding a preform.

### CITATION LIST

### PATENT LITERATURE

PTL 1: JP 06-305002 A

### SUMMARY OF INVENTION

### TECHNICAL PROBLEM

However, for example, in a mold unit for manufacturing a preform having a two-layer structure by repeating the injection molding twice, the precision required when moving an injection core mold into a neck mold (during mold closing), and the movement precision required for a fitting state when the neck mold and the injection core mold are fitted together (during mold clamping) are high, and there is room for improvement in configuration of the mold unit.

The present disclosure has been made in light of these circumstances, and an object thereof is to provide a mold unit, a blow molding apparatus, and a blow molding method by which it is possible to improve the precision required during mold closing and mold clamping.

### SOLUTION TO PROBLEM

A mold unit according to one aspect of the present disclosure is a mold unit for manufacturing a preform, including
an injection core mold unit including an injection core mold,
a neck mold unit including a neck mold,
an injection cavity mold unit including an injection cavity mold, and
a guide mechanism configured to guide an operation of the injection core mold during movement into the neck mold, in which
the guide mechanism is configured to release the guidance of the operation of the injection core mold when the injection core mold reaches a mold clamping position.

A blow molding apparatus according to one aspect of the present disclosure includes the mold unit described above.

A blow molding method according to one aspect of the present disclosure is a blow molding method including an injection forming step for manufacturing a preform, in which
the injection forming step includes
a mold closing step executed while guiding an operation of an injection core mold during movement into a neck mold, and
a mold clamping step executed in a state in which the guidance of the operation of the injection core mold is released.

According to the above configuration, the movement of the injection core mold is guided by the guide mechanism, and thus, it is possible to precisely move the injection core mold into the neck mold while suppressing interference between the injection core mold and the neck mold during the mold closing. The guide mechanism is configured to release the guidance of the operation of the injection core mold when the injection core mold reaches a mold clamping position, and thus, during the mold clamping, it is possible to precisely and concentrically fit the injection core mold and the neck mold together without being affected by the guide mechanism. Thus, according to the above configuration, it is possible to improve the precision required during mold closing and mold clamping.

### ADVANTAGEOUS EFFECTS OF INVENTION

According to the present disclosure, it is possible to provide a mold unit, a blow molding apparatus, and a blow molding method by which it is possible to improve the precision required during mold closing and mold clamping.

### BRIEF DESCRIPTION OF DRAWINGS

FIG. 1 is a block diagram of a blow molding apparatus according to the present embodiment.
FIG. 2 is a diagram illustrating a state of a mold unit during a guide start.
FIG. 3 is a diagram illustrating an area in the vicinity of a groove portion of a guide pin.
FIG. 4 is a diagram illustrating a state of a mold unit during mold closing.
FIG. 5 is a diagram illustrating a state of the mold unit when an injection core mold reaches a mold clamping position.
FIG. 6 is a diagram illustrating a state of the mold unit during mold clamping.
FIG. 7 is a flowchart illustrating a blow molding method according to the present embodiment.

### DESCRIPTION OF EMBODIMENTS

Hereinafter, an embodiment of the present disclosure will be described with reference to the drawings. Note that dimensions of the members illustrated in the drawings may be different from actual dimensions of the members for convenience of description.

### Description of Blow Molding Apparatus 100

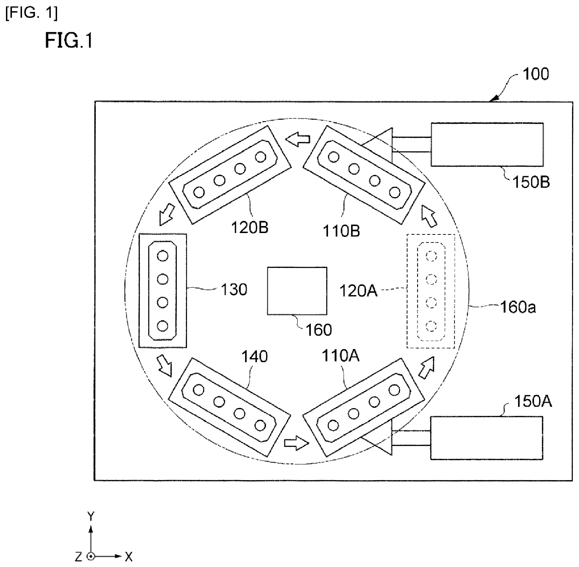

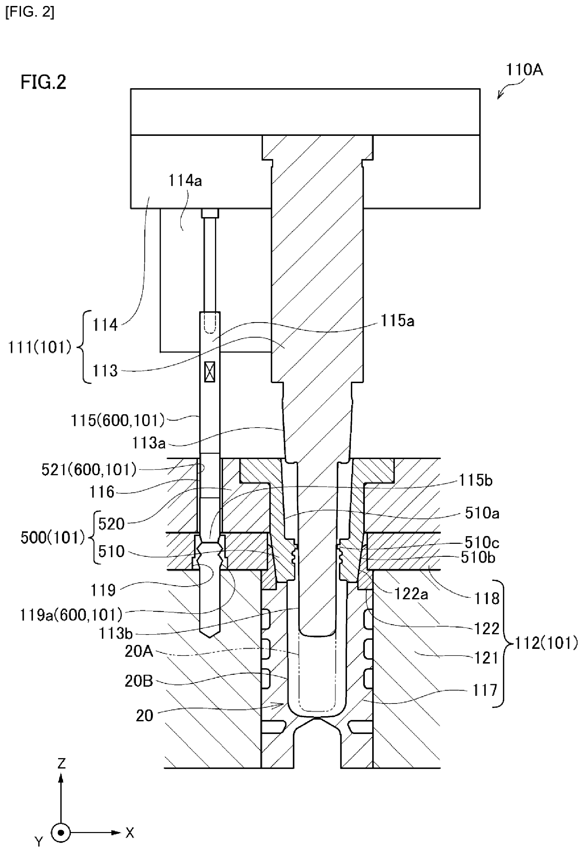

A blow molding apparatus 100 for manufacturing a container will be described with reference to FIG. 1. Note that the blow molding apparatus 100 according to the present embodiment is an apparatus employing a hot parison system (also called a one-stage system) for blow-molding a preform 20 (see FIG. 2) without cooling the preform 20 to room temperature, by utilizing the heat (internal heat) retained during injection molding. Note that the preform 20 according to the present embodiment has a two-layer structure including an inner layer 20A and an outer layer 20B located outside the inner layer 20A, and a double-dashed line in FIG. 2 indicates a portion that is both an outer surface of the inner layer 20A and an inner surface of the outer layer 20B. FIG. 1 is a block diagram illustrating the blow molding apparatus 100.

The blow molding apparatus 100 manufactures a resin container having a two-layer structure including an inner layer and an outer layer located outside the inner layer. Note that an example of such a resin container having a two-layer structure includes a delamination container made of resin in which an inner layer is peeled from an outer layer in response to the contents being discharged. A material of the container is, for example, a thermoplastic synthetic resin, and may be appropriately selected according to the use of the container. Examples of specific types of the material include polyethylene terephthalate (PET), polyethylene naphthalate (PEN), polycyclohexane dimethylene terephthalate (PCTA), Tritan (registered trademark; a copolyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate (PMMA, acrylic), and polylactic acid (PLA). For example, the material of the inner layer 20A of the preform 20 (or the resin container having a two-layer structure) may be PE or PP, and the material of the outer layer 20B may be PET.

The blow molding apparatus 100 includes a first injection molding section 110A, a first temperature adjusting section 120A, a second injection molding section 110B, a second temperature adjusting section 120B, a blow molding section 130, a removal section 140, and a transport means 160. The first injection molding section 110A, the first temperature adjusting section 120A, the second injection molding section 110B, the second temperature adjusting section 120B, the blow molding section 130, and the removal section 140 are arranged at positions obtained by rotation by the same predetermined angle (for example, 60 degrees) about the transport means 160. Note that the blow molding apparatus 100 may be configured to omit the first temperature adjusting section 120A (in such a case, each molding station is placed at a position obtained by rotation by 72 degrees about the transport means 160). The first injection molding section 110A and the second injection molding section 110B are arranged with a core mold elevating mechanism (not illustrated) above the transport means 160.

### Transport Means 160

The transport means 160 includes a rotating plate (transferring plate) 160a rotating about an axis in a direction (Z direction) perpendicular to the paper surface in FIG. 1. The rotating plate 160a is arranged with one or more neck mold units 500 configured to hold a neck portion of the preform 20 (or a neck portion of the resin container) at predetermined angles. Note that each of the neck mold units 500 includes a neck mold 510 and a neck mold fixing plate 520. The transport means 160 rotates the rotating plate 160a to transport the preform 20 (or the resin container) held by the neck mold unit 500, to the first injection molding section 110A, the first temperature adjusting section 120A, the second injection molding section 110B, the second temperature adjusting section 120B, the blow molding section 130, and the removal section 140, in this order. Note that the transport means 160 can also raise and lower the rotating plate 160a, and also performs an operation for mold closing and mold opening (mold releasing) of the neck mold unit 500 in the first injection molding section 110A and the second injection molding section 110B.

### First Injection Molding Section 110A

As illustrated in FIG. 2, the first injection molding section 110A includes an injection core mold unit 111, an injection cavity mold unit 112, and a hot runner mold (not illustrated). The first injection molding section 110A is connected with a first injection device 150A configured to supply a first resin material to the hot runner mold. The injection cavity mold unit 112 and the hot runner mold are fixed to a machine base of the blow molding apparatus 100 in an integrated state. The injection core mold unit 111 is fixed to a core mold elevating mechanism. Note that FIGS. 2 to 6 illustrate a state in which descending of the rotating plate 160a is completed and the neck mold 510 (neck mold unit 500) is stationary at a mold closing position or a mold clamping position. FIGS. 2 to 6 illustrate a state in which the injection core mold unit 111 is being descended from a standby position and the injection core mold unit 111 is transitioning from an area in the vicinity of the mold closing position to the mold clamping position.

The injection core mold unit 111 includes an injection core mold 113 and an injection core mold fixing plate 114. The injection cavity mold unit 112 includes an injection cavity mold 117, an injection cavity mold fixing block 121, a ring-shaped cavity mold 122, and an injection cavity mold holding plate 118. The injection cavity mold unit 112 defines shapes of an outer periphery of a body portion and an outer periphery of a bottom portion of the outer layer 20B. The injection cavity mold unit 112 may be provided with a protruded portion for forming a recessed portion having a circular shape, for example, in the outer layer 20B at a position corresponding to a recessed portion of the preform 20. The resin supply portion of the hot runner mold includes a valve pin (a rod-shaped member configured to open and close a resin supply portion) movable in an axial direction to a position close to the core mold. Movement of the valve pin during injection molding can form a thin film portion having a thickness of the resin material thinner than a thickness of the surrounding area, at a center of the bottom portion of the outer layer 20B. The injection core mold unit 111 and the injection cavity mold unit 112 include a refrigerant flow passage (not illustrated) for cooling the preform 20 (or the outer layer 20B).

In the first injection molding section 110A, the injection core mold 113, the injection cavity mold 117, and the neck mold 510 of the transport means 160 are closed to form a preform-shaped mold space. Next, a resin material is injected from the first injection device 150A into the preform-shaped mold space, and thus, the outer layer 20B of the preform 20 being made of resin and having a bottomed shape is manufactured in the first injection molding section 110A. Note that when the first injection molding section 110A is opened, the neck mold 510 of the transport means 160 is not opened and remains holding and transporting the preform 20.

Next, the injection core mold 113 and the injection core mold fixing plate 114 will be described. The injection core mold fixing plate 114 has, for example, a substantially rectangular parallelepiped shape. The injection core mold 113 has a generally substantially cylindrical shape and includes at least a tapered surface 113a and a molding surface 113b. The injection core mold fixing plate 114 is configured to fix the injection core mold 113. The injection core mold fixing plate 114 is provided with a fixing portion 114a extending in an up-down direction (Z direction in FIG. 2). The fixing portion 114a has, for example, a substantially cylindrical shape. A guide pin 115 is fixed to the fixing portion 114a of the injection core mold fixing plate 114. Thus, the guide pin 115 is provided in the injection core mold fixing plate 114 of the injection core mold unit 111.

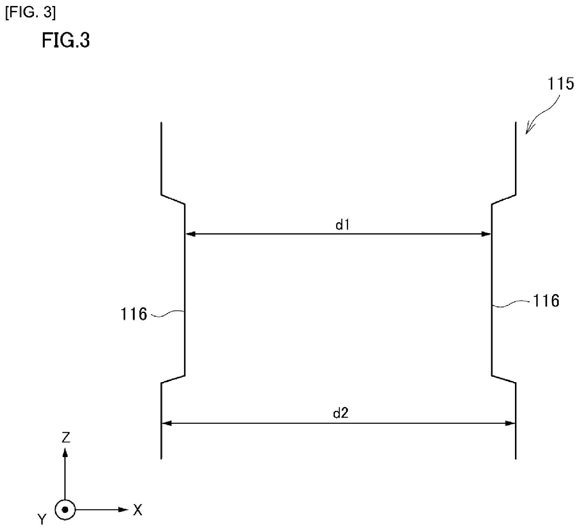

The guide pin 115 is a pin that guides an operation of the injection core mold 113 during movement (rise and fall) between a guide start position and a mold clamping position. The guide start position is a position of the injection core mold 113 at which the injection core mold 113 descends by a predetermined distance from an initial position after the mold closing begins, and a position of the injection core mold 113 when the operation begins to be guided. Note that the initial position is a position of the injection core mold 113 before the mold closing begins (a position where the injection core mold 113 is located above the transport means 160 (or the rotating plate 160a), and a lower end of the injection core mold 113 does not interfere with the transport means 160 (or the rotating plate 160a) during rotation). The mold clamping position is a position of the injection core mold 113 when the mold closing is completed and the mold clamping is started. The guide pin 115 has, for example, a substantially columnar shape. An upper end portion 115a of the guide pin 115 is inserted into the fixing portion 114a. The guide pin 115 extends in the up-down direction (Z direction in FIG. 2). As illustrated in FIG. 3, a groove portion 116 is formed in the guide pin 115. The groove portion 116 has a substantially concave shape (substantially U shape). The groove portion 116 is recessed toward an inner side of the guide pin 115. Therefore, a diameter d1 of the groove portion 116 is shorter than a diameter d2 of a portion, not formed with the groove 116, of the guide pin 115.

Returning to FIG. 2, the injection cavity mold 117, the injection cavity mold fixing block 121, the ring-shaped cavity mold 122 (a part of the injection cavity mold 117), and the injection cavity mold holding plate 118 will be described. The injection cavity mold fixing block 121 and the injection cavity mold holding plate 118 have, for example, a substantially rectangular parallelepiped shape. The injection cavity mold 117 has, for example, a substantially columnar shape. The injection cavity mold fixing block 121 includes one or more recessed portions that accommodate and hold the injection cavity mold 117. The ring-shaped cavity mold 122 is substantially annular. The ring-shaped cavity mold 122 includes, at an upper part, a tapered surface 122a abutting against the neck mold 510, and at a lower part, a stepped portion fitting with the upper part of the injection cavity mold 117, respectively. The injection cavity mold holding plate 118 is configured to fix the injection cavity mold 117 and the ring-shaped cavity mold 122 to the injection cavity mold fixing block 121. The injection cavity mold holding plate 118 is formed with a second through hole 119. The second through hole 119 has, for example, a substantially circular shape in plan view. The second through hole 119 is provided with a guide bush 119a. The guide bush 119a is substantially cylindrical. The guide bush 119a functions as a receiving hole for the guide pin 115 of the injection core mold unit 111. A diameter of the guide bush 119a is longer (larger) than the diameter d1 of the groove portion 116 (see FIG. 3), and is substantially equal to the diameter d2 of a portion, not formed with the groove portion 116, of the guide pin 115 (see FIG. 3). That is, the diameter d1 of the groove portion 116 is shorter (smaller) than the diameter of the guide bush 119a, and thus, when the groove portion 116 is inside the guide bush 119a, a guide regarding the operation of the injection core mold 113 is released.

The neck mold 510 includes a first tapered surface 510a and a second tapered surface 510b. The neck mold 510 further includes an inward annular portion 510c on an inner circumferential surface through which the injection core mold 113 is inserted. During the mold clamping, an inner surface of the inward annular portion 510c and an outer surface of the injection core mold 113 come close to each other, and at a position shifted downward from an upper end of the injection core mold 113, a parting surface (parting line) is formed. The neck mold 510 is configured to hold a neck portion of the preform 20 or a container formed from the preform 20. The neck mold 510 is configured such that the injection core mold 113 can move into the neck mold 510. More specifically, the injection core mold 113 can move in the neck mold 510 when lifting and descending in an up-and-down direction (Z direction in FIG. 2).

The neck mold fixing plate 520 is configured to fix the neck mold 510. The neck mold fixing plate 520 is formed with a first through hole 521 through which the guide pin 115 can move. The first through hole 521 has, for example, a substantially circular shape in plan view. A diameter of the first through hole 521 is longer (larger) than the diameter d1 of the groove portion 116 (see FIG. 3), and is substantially equal to the diameter d2 of a portion, not formed with the groove portion 116, of the guide pin 115 (see FIG. 3).

In the present embodiment, the guide mechanism 600 includes the guide pin 115, the first through hole 521, and the guide bush 119a. The guide mechanism 600 is configured to guide the operation of the injection core mold 113 during movement into the neck mold 510. The guide mechanism 600 is configured to release the guidance of the operation of the injection core mold 113 when the injection core mold 113 reaches the mold clamping position. Further, the term "mold unit 101" is used herein as a concept including at least the injection core mold unit 111, the injection cavity mold unit 112, the neck mold unit 500, and the guide mechanism 600.

### First Temperature Adjusting Section 120A

Returning to FIG. 1, the first temperature adjusting section 120A will be described. The first temperature adjusting section 120A includes an unillustrated first temperature adjustment mold unit (a heating pot or a temperature adjustment pot (temperature adjusting pot) for adjusting a temperature of the outer layer 20B of the preform 20 from the outside, and a heating core, a temperature adjustment core (temperature adjusting core), or an air introduction core for adjusting a temperature of the outer layer 20B from the inside). The first temperature adjusting section 120A cools (or heats) the outer layer 20B in a high temperature state after injection molding, by accommodating the outer layer 20B in the first temperature adjustment mold unit maintained at a predetermined temperature. The first temperature adjusting section 120A also functions to adjust a temperature distribution of the outer layer 20B to a predetermined state before the outer layer 20B is transported to the second injection molding section 110B. Note that the first temperature adjusting section 120A may be configured to form an opening portion by penetrating through a thin portion of a bottom portion of the outer layer 20B when the outer layer 20B of the preform 20 is accommodated in the first temperature adjustment mold unit.

### Second Injection Molding Section 110B

The second injection molding section 110B includes a cavity mold, a core mold, and a hot runner mold (not illustrated), and cooperates with a neck mold transported during the molding to injection-mold the inner layer 20A on an inner peripheral side of the outer layer 20B. A molding space for the inner layer 20A is formed between the outer layer 20B and the core mold, and thus, the core mold has a smaller diameter and is shorter than the injection core mold 113 of the first injection molding section 110A. The second injection molding section 110B is connected with a second injection device 150B configured to supply a second resin material to the hot runner mold. By introducing the second resin material plasticized (melted) by the second injection device 150B, into a thin film portion of the inner layer 20A, an opening penetrating the inner layer 20A is formed, and the inner layer 20A is laminated on the inner circumference side of the outer layer 20B. Note that if the first temperature adjusting section 120A is configured to form the opening in a bottom portion of the outer layer 20B, the second resin material is introduced into the inner circumference side of the outer layer 20B through the opening.

The cavity mold of the second injection molding section 110B is a mold accommodating the outer layer 20B. The cavity mold of the second injection molding section 110B may be provided with a protruded portion having a cylindrical shape or the like corresponding to a shape of the recessed portion of the preform 20 at a predetermined position corresponding to the protruded portion of the first injection molding section 110A. If the protruded portion is provided in the second injection molding section 110B, the protruded portion is inserted into the recessed portion of the outer layer 110B when the outer layer 20B is accommodated in the second injection molding section 110B. A projecting amount of the protruded portion of the second injection molding section 110B from a cavity reference surface of the cavity mold (a cavity surface that contacts a lower end region of a bottom outer peripheral surface of the outer layer 20B) of the second injection molding section 110B has a dimension larger than a thickness of the outer layer 20B (projecting amount of the protruded portion of the first injection molding section 110A). The projecting amount of the protruded portion of the second injection molding section 110B is set to be smaller than the thickness of the preform 20.

### Second Temperature Adjusting Section 120B

The second temperature adjusting section 120B includes a second temperature adjustment mold unit. The second temperature adjusting section 120B equalizes the temperature and eliminates temperature variations by accommodating the preform 20 transported from the second injection molding section 110B into the second temperature adjustment mold unit maintained at a predetermined temperature to adjust the temperature of the preform 20 to a temperature suitable for the final blow (for example, approximately 90°C to 105°C). The second temperature adjusting section 120B also has a function of cooling the preform 20 in a high temperature state after the injection molding. The second temperature adjusting section 120B may have a function of heating the preform 20.

### Blow Molding Section 130

The blow molding section 130 blow-molds the preform 20 adjusted in temperature by the second temperature adjusting section 120B to manufacture a resin container. The blow molding section 130 includes a blow cavity mold that is a pair of split molds corresponding to a shape of the resin container, a bottom mold, a stretching rod, and an air introduction member (none of which is illustrated). The blow molding section 130 blow-molds the preform 20 while stretching the preform 20. As a result, the preform 20 is shaped into a shape of the blow cavity mold, and a resin container can be manufactured.

### Removal Section 140

The removal section 140 is configured to open a neck portion of the resin container manufactured by the blow molding section 130 from the neck mold unit 500 of the transport means 160 and remove the resin container to the outside of the blow molding apparatus 100.

### Description of Operation of Mold Unit 101 During Formation of Outer Layer 20B of Preform 20

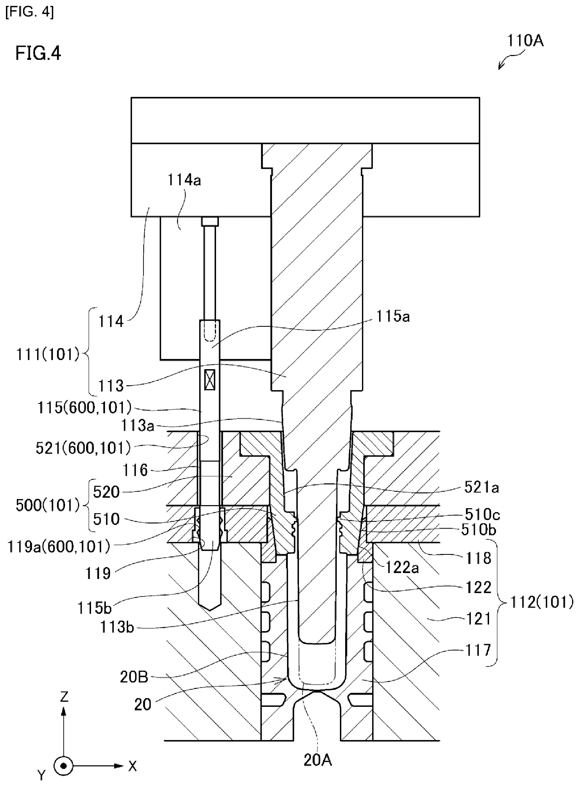

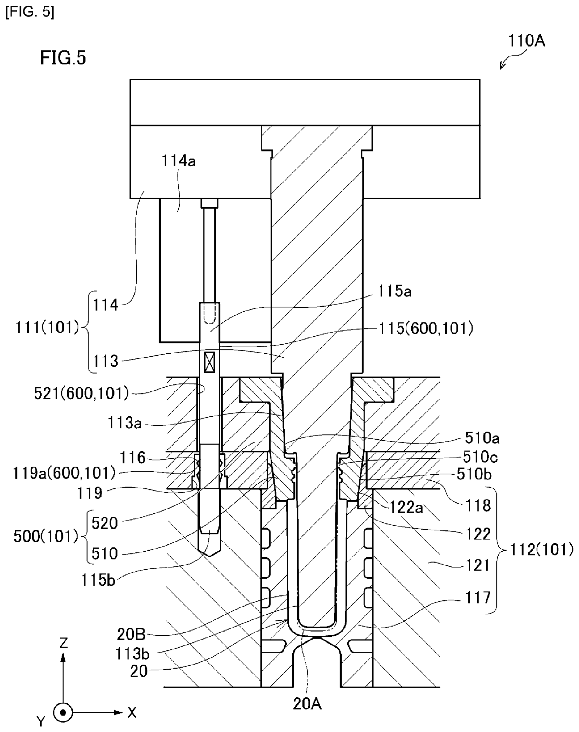

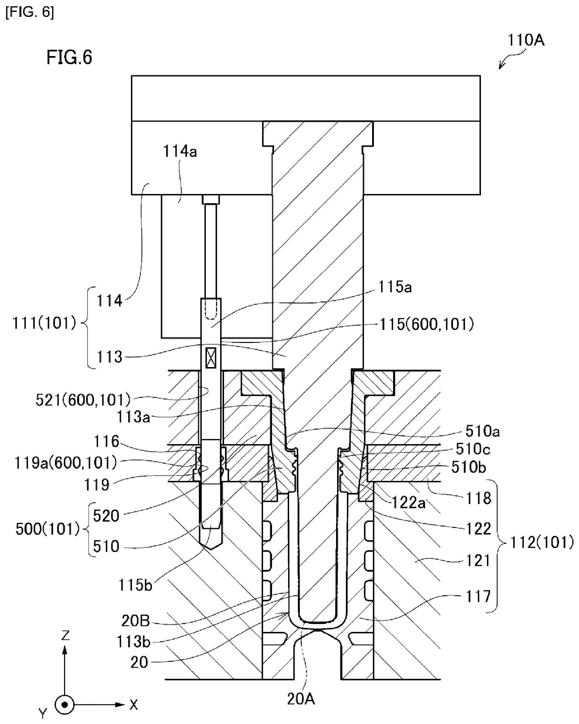

Next, with reference to FIG. 2 and FIGS. 4 to 6, an operation of the mold unit 101 during formation of the outer layer side 20B of the preform 20 will be described. Note that in the preform 20 according to the present embodiment, the outer layer 20B is formed firstly, and then, the inner layer 20A is formed. The mold unit 101 is used during formation of the outer layer 20B. FIG. 2 is a diagram illustrating a state of the mold unit 101 during a guide start. FIG. 4 is a diagram illustrating a state of the mold unit 101 during mold closing. FIG. 5 is a diagram illustrating a state of the mold unit 101 when the injection core mold 113 reaches the mold clamping position. FIG. 6 is a diagram illustrating a state of the mold unit 101 during mold clamping. Note that the state illustrated in FIG. 2 is a state in which the neck mold 510 is descended by an elevating mechanism (not illustrated) and the mold closing is completed. In the state illustrated in FIG. 2, the second tapered surface 510b of the neck mold 510 and the tapered surface 122a of the ring-shaped cavity mold 122 abut against each other.

When the mold closing operation is started, and the neck mold 510 (neck mold unit 500) descends from a standby position to the mold closing position and when the injection core mold 113 descends from an initial position to the guide start position illustrated in FIG. 2, the guide mechanism 600 starts guiding an operation of the injection core mold 113 during movement into the neck mold 510. At this time, a lower end portion 115b of the guide pin 115 is inserted into the second through hole 119. Note that in a state illustrated in FIG. 2, a clearance between the outer surface of the injection core mold 113 and the inner surface of the neck mold 510 (a gap between the outer surface of the injection core mold 113 and the inner surface of the inward annular portion 510c of the neck mold 510) is, for example, about 0.4 mm. Note that the standby position of the neck mold 510 is a position where the neck mold 510 is located above an upper end of the injection cavity mold 117 (or the injection cavity mold unit 112) and is a position where the neck mold 510 can be rotationally transported to the next molding section (next step) by the transport means 160 (or the rotating plate 160a).

When the injection core mold 113 descends further from the position illustrated in FIG. 2 (guide start position) (for example, when the injection core mold 113 descends, for example, by 14 mm from the guide start position), the injection core mold 113 transitions from the state illustrated in FIG. 2 to a state illustrated in FIG. 4. In the state illustrated in FIG. 4, the guide pin 115 is inserted through the second through hole 119, but a portion of the guide pin 115 not formed with the groove portion 116 is inserted through the second through hole 119. Note that in the state illustrated in FIG. 4, the clearance between the outer surface of the injection core mold 113 and the inner surface of the neck mold 510 is, for example, about 0.24 mm.

When the injection core mold 113 descends from the position illustrated in FIG. 4 to the mold clamping position illustrated in FIG. 5, the state illustrated in FIG. 4 transitions to a state illustrated in FIG. 5 (that is, a state in which the injection core mold 113 reaches the mold clamping position). In the state illustrated in FIG. 5, the tapered surface 113a of the injection core mold 113 and the first tapered surface 510a of the neck mold 510 abut against each other. In the state illustrated in FIG. 5, the guide pin 115 is inserted through the second through hole 119, but it is the groove portion 116 of the guide pin 115 that is inserted through the second through hole 119. When the groove portion 116 is inside the guide bush 119a, the guide relating to the operation of the injection core mold 113 is released, and therefore, it is possible to perform the mold clamping without the influence of the guide mechanism 600 being applied to the injection core mold 113. Thus, in the present embodiment, the groove portion 116 is configured such that the guide is released with respect to the guide bush 119a when the injection core mold 113 reaches the mold clamping position. Therefore, the mold clamping described later can be performed in a state where the respective tapered surfaces of the injection core mold 113, the neck mold 510, and the injection cavity mold are brought into abutment with each other and centering of the injection molding molds is realized.

When the injection core mold 113 reaches the mold clamping position, the mold closing is completed and the mold clamping is started. In the state illustrated in FIG. 5, the clearance between the outer surface of the injection core mold 113 and the inner surface of the neck mold 510 is, for example, about 0.02 mm to about 0.05 mm. In a case where the clearance between the outer surface of the injection core mold 113 and the inner surface of the neck mold 510 is about 0.02 mm to about 0.05 mm, air can pass through a gap formed between the outer surface of the injection core mold 113 and the inner surface of the neck mold 510, but the resin material cannot pass through the gap. Therefore, it is preferable that the clearance between the outer surface of the injection core mold 113 and the inner surface of the neck mold 510 during the mold clamping is about 0.02 mm to about 0.05 mm. Therefore, during the mold clamping, the outer surface of the injection core mold 113 and the inner surface of the neck mold 510 are close enough to be in contact with each other.

When the injection core mold 113 and the neck mold 510 are mold-clamped and the mold clamping is completed, the state transitions to a state illustrated in FIG. 6. Also in the state illustrated in FIG. 6, the tapered surface 113a of the injection core mold 113 and the first tapered surface 510a of the neck mold 510 abut against each other. The second tapered surface 510b of the neck mold 510 and the tapered surface 122a of the ring-shaped cavity mold 122 also abut against each other. Also in the state illustrated in FIG. 6, the guide pin 115 is inserted through the second through hole 119, but it is the groove portion 116 of the guide pin 115 that is inserted through the second through hole 119. In the present embodiment, the tapered surface 113a of the injection core mold 113 and the first tapered surface 510a of the neck mold 510 abut against each other, and the injection core mold 113 and the neck mold 510 are fitted together in a concentric state and then mold-clamped.

After the mold clamping is completed, a mold space formed by the injection core mold 113, the injection cavity mold 117, and the neck mold 510 is filled with the resin material from the first injection device 150A. After a cooling step for a certain period of time (minimum) from the completion of the filling of the resin material, the injection core mold 113 is raised, and the state illustrated in FIG. 6 transitions to the state illustrated in FIG. 2. At this time, during the mold clamping, the outer surface of the injection core mold 113 and the inner surface of the neck mold 510 are close enough to be in contact with each other, and thus, when the injection core mold 113 begins to be raised, there is a risk that the injection core mold 113 and the neck mold 510 may interfere with each other. However, when the injection core mold 113 is raised by a predetermined distance (for example, 1.6 mm) from the state illustrated in FIG. 6, the operation of the injection core mold 113 during movement into the neck mold 510 is again guided by the guide mechanism 600, and thus, the injection core mold 113 and the neck mold 510 do not interfere with each other. Thus, the outer layer 20B of the preform 20 is formed. After the formation is completed, the neck mold 510 is raised to the standby position, and the injection core mold 113 is raised to the initial position, respectively, and the outer layer 20B is released from the injection cavity mold 117 and the injection core mold 113.

### Description of Blow Molding Method

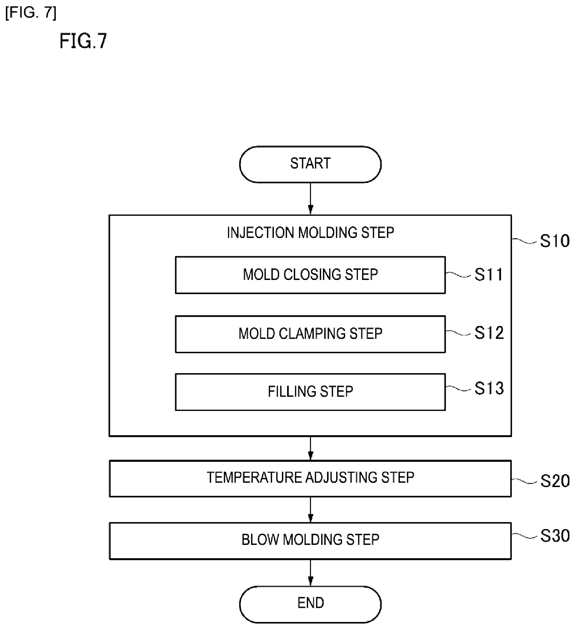

Next, a blow molding method by the blow molding apparatus 100 according to the present embodiment will be described. FIG. 7 is a flowchart illustrating the blow molding method according to the present embodiment. As illustrated in FIG. 7, the blow molding method according to the present embodiment includes an injection molding step S10 for injection molding the preform 20, a temperature adjusting step S20 for adjusting the temperature of the preform 20, and a blow molding step S30 for blow molding the temperature-adjusted preform 20 to manufacture a container. Note that the manufactured container is removed by opening the neck portion of the container from the neck mold 510 of the transport means 160.

Next, the injection molding step S10 will be firstly described. As illustrated in FIG. 7, the injection molding step S10 includes a mold closing step S11, a mold clamping step S12, and a filling step S13. In the mold closing step S11, the injection core mold 113 and the neck mold 510 are closed. The mold closing step S11 is executed while guiding the operation of the injection core mold 113 during movement into the neck mold 510.

In the mold clamping step S12, the injection core mold 113, the injection cavity mold 117, and the neck mold 510 are clamped. The mold clamping step S12 is executed in a state in which the guidance of the operation of the injection core mold 113 is released.

In the filling step S13, the mold space formed by the injection core mold 113, the injection cavity mold 117, and the neck mold 510 is filled with the resin material to form the outer layer 20B of the preform 20. Next, the inner layer 20A of the preform 20 is formed. Note that when the inner layer 20A of the preform 20 is formed, the guide pin 115 (guide mechanism 600) is not used. Therefore, the operation of the injection core mold used when the inner layer 20A of the preform 20 is formed is not guided by the guide mechanism 600. Next, after a cooling step for a certain time (minimum) after the filling is completed, the injection core mold 113 is raised to release the preform 20 from the injection core mold 113, and subsequently or in parallel, the neck mold 510 is raised to release the preform 20 from the injection cavity mold 117. After the injection molding step S10, the preform 20 is moved from the injection molding section 110 to the temperature adjusting section 120.

Next, the temperature adjusting step S20 will be described. In the temperature adjusting step S20, by lowering the neck mold 510 of the transport means 160, the preform 20 moved to the temperature adjusting section 120, is accommodated in a temperature adjustment cavity mold (heating pot mold or temperature adjustment pot mold). Subsequently, a temperature adjustment core mold (the heating rod mold or the temperature adjustment rod mold) is inserted into the inner surface of the preform 20. The temperature adjustment core mold is inserted by lowering the temperature adjustment core mold. Note that the order of the accommodation of the preform 20 into the temperature adjustment cavity mold and the insertion of the temperature adjustment core mold may be reversed. The accommodation of the preform 20 into the temperature adjustment cavity mold and the insertion of the temperature adjustment core mold may be carried out at the same time. The preform 20 is arranged between the temperature adjustment cavity mold and the temperature adjustment core mold, and the temperature adjustment core mold is used to adjust the temperature of the preform 20 to a suitable temperature for the blow molding while eliminating an uneven temperature in a circumferential direction of the body portion of the preform 20. Thereafter, the temperature adjustment core mold is raised to release the preform 20 from the temperature adjustment core mold, and the temperature adjustment cavity mold is descended to release the preform 20 from the temperature adjustment cavity mold. After the temperature adjusting step S20, the preform 20 is moved from the temperature adjusting section 120 to the blow molding section 130.

Next, the blow molding step S30 will be described. In the blow molding step S30, the preform 20 moved to the blow molding section 130 is accommodated in the blow cavity mold. Subsequently, when blown air is introduced from the blow core mold while optionally stretching the preform 20 with a stretching rod, the preform 20 with the temperature adjusted in the temperature adjusting step S20 is inflated to the shape of the container to manufacture the container. Thereafter, the container is released from the mold of the blow molding section 130, and the container is transported to the removal section 140 and the container is removed. With the above procedure, the container is manufactured.

Incidentally, for example, a delamination container being a resin container having a two-layer structure includes a ventilation passage at a neck portion or the like configured to introduce air between an inner layer and an outer layer, and thus, such a ventilation passage is a gap between the inner layer and the outer layer at the neck portion. Such a gap can be formed by pushing the neck portion of the inner layer formed to protrude from the neck portion of the outer layer, downwards, and by providing a flange at an upper end portion of the neck portion of the inner layer and bringing a bottom surface of the flange into contact with a top surface of the neck portion of the outer layer. However, when the gap (ventilation passage) is formed by the latter method, the top surface of the neck portion of the outer layer needs to be formed with high precision. Specifically, during the formation of the preform of the outer layer, the clearance between the outer surface of the injection core mold and the inner surface of the neck mold is kept minimum (for example, about 0.02 mm or less), and the injection core mold and the neck mold are fitted together and clamped to suppress a molding defect (for example, burrs) occurring on the top surface of the neck portion of the outer layer.

If the latter method is adopted, during mold closing, it is necessary to ensure that the injection core mold does not interfere with the neck mold. In such a case, it is also necessary to set the clearance between the outer surface of the injection core mold and the inner surface of the neck mold during the mold closing in a range of about 0.02 mm to 0.4 mm. Therefore, if the latter method is adopted, it is necessary to move (descend) the injection core mold with high precision. During the mold clamping, it is necessary to bring the tapered surface of the injection core mold and the tapered surface of the neck mold into abutment with each other and to fit both the surfaces in a concentric state. Thus, in the mold unit for manufacturing the preform having a two-layer structure by repeating injection molding twice, the movement precision required when moving the injection core mold into the neck mold (during the mold closing), and the precision of a fitting state required when fitting the injection core mold and the neck mold (during the mold clamping) are high, and there is room for improvement in configuration of the mold unit.

Based on the mold unit 101 according to the above embodiment, the movement of the injection core mold 113 is guided by the guide mechanism 600, and thus, it is possible to precisely move the injection core mold 113 into the neck mold 510 while suppressing interference between the injection core mold 113 and the neck mold 510 during the mold closing. The guide mechanism 600 is configured to release the guidance of the operation of the injection core mold 113 when the injection core mold 113 reaches the mold clamping position. That is, the operation of the injection core mold 113 is guided to the mold clamping position, whereas the guidance of the operation of the injection core mold 113 is released when the injection core mold 113 reaches the mold clamping position. Therefore, during the mold clamping, the injection core mold 113 and the neck mold 510 can be fitted to each other in a concentric state with precision without being affected by the guide mechanism 600.

According to the mold unit 101 in the above-described embodiment, the guide mechanism 600 includes the guide pin 115, the first through hole 521 through which the guide pin 115 can move, and the guide bush 119a provided in the second through hole 119. That is, according to the mold unit 101, the precision required during the mold closing and the mold clamping can be improved while the guide mechanism 600 is thus configured simply.

According to the mold unit 101 in the above-described embodiment, configuration is that the groove portion 116 is formed in the guide pin 115, and when the injection core mold 113 reaches the mold clamping position, the guidance of the operation of the injection core mold 113 is released. That is, according to the mold unit 101, the groove portion 116 having such a simple configuration is formed in the guide pin 115, and as a result, it is possible to improve the precision required during the mold closing and the mold clamping.

The above embodiment is intended to facilitate understanding of the present disclosure, and is not intended to limit the present disclosure. The present disclosure may be modified and improved without departing from the spirit thereof.

In the above embodiment, the blow molding apparatus 100 is a six-station typed apparatus in that the first injection molding section 110A, the first temperature adjusting section 120A, the second injection molding section 110B, the second temperature adjusting section 120B, the blow molding section 130, and the removal section 140 are arranged at positions each defined by rotation by 60 degrees about the transport means 160, but the present disclosure is not limited to such a typed apparatus. For example, the blow molding apparatus 100 may be a four-station typed apparatus in that the injection molding section, the temperature adjusting section, the blow molding section 130, and the removal section 140 are provided at positions each defined by rotation by 90 degrees about the transport means 160. For example, the blow molding apparatus 100 may be a three-station typed apparatus in that the injection molding section, the blow molding section 130, and the removal section 140 are provided at positions each defined by rotation by 120 degrees around the transport means 160.

In the above embodiment, when the outer layer of the preform 20 is formed, the guide pin 115 (guide mechanism 600) is used, and when the inner layer 20A of the preform 20 is formed, the guide pin 115 (guide mechanism 600) is not used. However, the present disclosure is not limited thereto. For example, not only when the outer layer of the preform 20 is formed, but also when the inner layer 20A of the preform 20 is formed, the guide pin 115 (guide mechanism 600) may be used.

In the above-described embodiment, the blow molding apparatus 100 manufactures a resin container having a two-layer structure including an inner layer and an outer layer located outside the inner layer, but, for example, the blow molding apparatus 100 may manufacture a resin container having a one-layer structure. In such a case as well, the resin container is manufactured, for example, by a blow molding method including the injection molding step S10, the temperature adjusting step S20, and the blow molding step S30 described above.

This application is based on Japanese Patent Application (JP 2023-178353) filed on Oct. 16, 2023, the contents of which are incorporated herein by reference.

### REFERENCE SIGNS LIST

20: Preform, 20A: Inner layer, 20B: Outer layer, 100: Blow molding apparatus, 101: Mold unit, 110A: First injection molding section, 110B: Second injection molding section, 111: Injection core mold unit, 112: Injection cavity mold unit, 113: Injection core mold, 113a: Tapered surface of injection core mold, 113b: Molding surface, 114: Injection core mold fixing plate, 114a: Fixing portion, 115: Guide pin, 115a: Upper end portion, 115b: Lower end portion, 116: Groove portion, 117: Injection cavity mold, 118: Injection cavity mold holding plate, 119: Second through hole, 119a: Guide bush, 120A: First temperature adjusting section, 120B: Second temperature adjusting section, 121: Injection cavity mold fixing block, 122: Ring-shaped cavity mold,
122a: Tapered surface of ring-shaped cavity mold, 130: Blow molding section, 140: Removal section, 150A: First injection device, 150B: Second injection device, 160: Transport means, 160a: Rotating plate, 500: Neck mold unit, 510: Neck mold, 510a: First tapered surface, 510b: Second tapered surface, 510c: Inward annular portion, 520: Neck mold fixing plate, 521: First through hole, 600: Guide mechanism

## Claims

1. A mold unit for manufacturing a preform, comprising:
an injection core mold unit including an injection core mold;
a neck mold unit including a neck mold;
an injection cavity mold unit including an injection cavity mold; and
a guide mechanism configured to guide an operation of the injection core mold during movement into the neck mold, wherein
the guide mechanism is configured to release the guidance of the operation of the injection core mold when the injection core mold reaches a mold clamping position.

2. The mold unit according to claim 1, wherein the guide mechanism includes:
a guide pin provided in the injection core mold unit;
a first through hole formed in the neck mold unit, the first through hole through which the guide pin is movable; and
a guide bush provided in a second through hole formed in the injection cavity mold unit.

3. The mold unit according to claim 2, wherein the guide pin is formed with a groove portion, and
when the injection core mold reaches the mold clamping position, the groove portion of the guide pin is configured such that the guide is released with respect to the guide bush.

4. A blow molding apparatus comprising the mold unit according to any one of claims 1 to 3.

5. A blow molding method comprising: an injection forming step of manufacturing a preform, wherein
the injection forming step includes:
a mold closing step executed while guiding an operation of an injection core mold during movement into a neck mold; and
a mold clamping step executed in a state in which the guidance of the operation of the injection core mold is released.
